# EUROPEAN PATENT SPECIFICATION

(11) **EP 3 409 571 B1**
(45) Date of publication and mention of the grant of the patent: **22.01.2020**
(21) Application number: 16887942.7
(22) Date of filing: 28.01.2016
(51) Int. Cl.: B62L 3/08, B62K 19/38, B62L 3/02, B62L 3/04, B62M 7/04, B60T 11/04, B60T 11/06, B60T 11/10, B60T 11/18, B60T 7/06, B60T 8/17, B62J 99/00

(54) **SADDLED VEHICLE EQUIPPED WITH COMBINED BRAKE SYSTEM**
SATTELFAHRZEUG MIT KOMBINATIONSBREMSANLAGE
VÉHICULE À SELLE ÉQUIPÉ D'UN SYSTÈME DE FREINAGE COMBINÉ

(43) Date of publication of application: 05.12.2018
(73) Proprietor: Yamaha Hatsudoki Kabushiki Kaisha, Iwata-shi, Shizuoka 438-8501 (JP)
(72) Inventor: SUGIYAMA, Masazumi, Iwata-shi Shizuoka 438-8501 (JP); OZAWA, Toshiaki, Iwata-shi Shizuoka 438-8501 (JP)
(74) Representative: Grünecker Patent- und Rechtsanwälte PartG mbB
(86) International application number: PCT/JP2016/052517
(87) International publication number: WO 2017/130355

(56) References cited:
- WO-A1-2014/147900
- JP-A- 2009 227 119
- JP-A- 2011 195 024
- JP-A- 2014 046 798

## Description

### TECHNICAL FIELD

The present invention relates to a straddled vehicle including a combined brake system.

### BACKGROUND ART

A combined brake system in which a front wheel brake and a rear wheel brake are operated in a combined manner when a rider of a motorcycle operates a brake pedal is known. For example, Japanese Laid-Open Patent Publication No. 2009-67133 discloses a hydraulic combined brake system. In this combined brake system, a brake route is set along one main frame extending, above an engine, from a front portion of a vehicle body toward a rear portion thereof. In this brake route, a front elastic hose extends from a master cylinder located to the right of a handle to a central position in a vehicle width direction, and is connected with a connection member located to the front of a head pipe. An intermediate pipe connected with the connection member extends rearward in the vehicle along the main frame.

When the rider operates the brake pedal located at his/her right foot, the master cylinder located in the vicinity of the brake pedal is pressed, and the pressing force thereof is distributed for the front wheel brake and the rear wheel brake. The pressing force distributed for the front wheel brake is transmitted toward the front wheel brake via the brake route, and brakes the front wheel.

Japanese Laid-Open Patent Publication No. 2014-046798 discloses a vehicle according to the preamble of independent claim 1.

### SUMMARY OF INVENTION

### TECHNICAL PROBLEM

In a wire-type combined brake system, in the case where the brake route is set along the main frame from the head pipe as described above, the curvature of the combined brake cable is increased. When the curvature of the combined brake cable is increased, the operability may be deteriorated or the routing workability may be declined.

In light of such a problem, the present inventors made active studies on a structure that decreases the curvature of the combined brake cable. The present inventors paid attention to a large space that was made in a right region of the vehicle and below the main frame, and as a result, conceived that the center of curvature set at a lower position would decrease the curvature of the combined brake cable.

However, the present inventors faced another problem. A combined brake cable, in the case of being routed in the above-described space, is located to be lower and more distanced from the main frame. Therefore, it is difficult to cause the main frame to support the combined brake cable. The present inventors first conceived, by a conventional idea of causing the frame to support the combined brake cable, a structure of causing a downtube to support the combined brake cable. In a vehicle having a two-downtube frame structure, two downtubes are located respectively in a right region and a left region of the vehicle. Therefore, it is relatively easy for the downtube located in the right region of the vehicle to support the combined brake cable. However, there are motorcycles having a one-downtube frame structure from the point of view of, for example, decreasing the weight. In this case, such one downtube passes a central portion in the vehicle width direction of the vehicle and extends from a front portion to a rear portion, and from a top portion to a bottom portion, of the vehicle. If the downtube passing the central portion of the vehicle is caused to support the combined brake cable, the combined brake cable extending from the downtube at the center of the vehicle to the brake pedal in the right region of the vehicle easily interferes with an engine, which is to have a high temperature.

The present invention has an object of improving the operability and the routing workability of a straddled vehicle including a one-downtube frame structure.

### SOLUTION TO PROBLEM

A straddled vehicle in an embodiment according to the present invention includes a frame including a head pipe; a front wheel and a rear wheel rotatably supported by the frame; a handle supported so as to be rotatable about an axis of the head pipe; an engine supported by the frame; and a combined brake system including a front wheel brake braking the front wheel and a rear wheel brake braking the rear wheel, the combined brake system operating the front wheel brake and the rear wheel brake in a combined manner. The frame includes a main frame extending rearward from the head pipe, the main frame supporting the engine such that the engine is below the main frame; and one downtube extending downward and rearward from the head pipe so as to be at least partially located to the front of the engine. The combined brake system includes a front wheel brake actuator provided on the handle, the front wheel brake actuator actuating the front wheel brake in response to an operation made by a rider; a rear wheel brake actuator provided to the rear of, and below, the front wheel brake actuator, the rear wheel brake actuator actuating the rear wheel brake in response to an operation made by the rider; and a combined brake cable connected with the front wheel brake actuator and with the rear wheel brake actuator, the combined brake cable transmitting an operational force applied to the rear wheel brake actuator to the front wheel brake actuator. The front wheel brake actuator is located in a first area, which is one of two areas separated from each other as being to the right of, and to the left of, a vehicle center line as seen in a vehicle plan view. The combined brake cable is routed in the first area, and at least partially overlaps the engine as seen in a vehicle side view. The straddled vehicle further includes a support member supporting the combined brake cable at a position to the side of the engine.

The front wheel brake actuator actuating the front wheel brake is located in the first area (e.g., right region of the vehicle). The combined brake cable transmitting the operational force applied to the rear wheel brake actuator to the front wheel brake actuator is routed to pass the first area.

With such an arrangement, a space in the first area, which is larger than the space in the vicinity of the head pipe, is usable as a space in which the combined brake cable is routed. The combined brake cable is bent downward to decrease the curvature thereof. In other words, the center of the curvature of the combined brake cable is located at a lower position, so that the curvature of the combined brake cable is decreased.

The combined brake cable is supported at a position to the side of the engine.

In the case where the combined brake cable overlaps the engine as seen in a vehicle side view, the combined brake cable easily contacts the engine. In the case where the combined brake cable is supported at a position to the side of the engine, a space is provided with certainty between the combined brake cable and the engine, and thus the combined brake cable is prevented from contacting the engine.

Since the space is provided with certainty between the combined brake cable and the engine, it is made difficult for the heat of the engine to be transmitted to the combined brake cable.

Since the combined brake cable is supported at a middle position in a front-rear direction of the vehicle, it is easy to define the attitude of the combined brake cable. This makes it easy to set a free play length (play amount) of the combined brake cable at the time of steering the handle.

In an embodiment, the combined brake cable may at least partially extend downward and rearward from a position to the front of the engine.

In the case where a certain sealing method is adopted, water may enter the inside of the combined brake cable. The combined brake cable extends downward and rearward from a front portion of the vehicle. If there is a portion of the combined brake cable in which a rear portion is located at a higher position than that of a front portion (if there is a portion hanging in a U-shape protruding downward), water is stored in such a portion and it is made difficult to discharge the water from the rear portion of the combined brake cable. However, in the case where the portion of the combined brake cable that overlaps the engine extends downward and rearward from a front portion, such a portion where water is easily stored is suppressed from being formed. Water, even if entering, is easily discharged.

In an embodiment, the combined brake cable may overlap a cylinder of the engine as seen in a vehicle side view.

In the case where the combined brake cable overlaps the engine as seen in a vehicle side view, the combined brake cable easily contacts the engine. In the case where the combined brake cable is supported at a position to the side of the engine, a space is provided with certainty between the combined brake cable and the engine, and thus the combined brake cable is prevented from contacting the engine.

In an embodiment, the rear wheel brake actuator may be located in the first area.

In an embodiment in which the front wheel braking actuator and the rear wheel braking actuator are located in the first area, the combined brake cable is routed to pass the first area so as to have the curvature thereof decreased.

In an embodiment, the combined brake cable may overlap the engine as seen in a vehicle side view; and while the handle is not steered, a portion, of the combined brake cable, overlapping the engine may be located such that a front end thereof is above a rear end thereof.

In the case where a certain sealing method is adopted, water may enter the inside of the combined brake cable. The combined brake cable extends downward and rearward from a front portion of the vehicle. If there is a portion of the combined brake cable in which a rear portion is located at a higher position than that of a front portion (if there is a portion hanging in a U-shape protruding downward), water is stored in such a portion and it is made difficult to discharge the water from the rear portion of the combined brake cable. However, in the case where the portion of the combined brake cable that overlaps the engine is located such that a front end thereof is above a rear end thereof, such a portion where water is easily stored is suppressed from being formed. Water, even if entering, is easily discharged.

In an embodiment, the combined brake cable may extend forward from a position thereof connected with the front wheel brake actuator, then may be bent downward, and may extend rearward.

The combined brake cable extends forward and then is bent downward, so as to have the curvature thereof further decreased.

In an embodiment, the straddled vehicle may further include a plurality of front wheel support members supporting the front wheel; and the combined brake cable may pass between the plurality of front wheel support members.

The combined brake cable passes between the front wheel support members, so as to be suppressed from moving in the vehicle width direction and so as to have the attitude thereof stabilized.

In an embodiment, the combined brake cable may be curved at a position to the rear of the rear wheel brake actuator and then may extend forward to be connected with the rear wheel brake actuator.

The combined brake cable is curved at a position to the rear of the rear wheel brake actuator and then extends forward, so as to have the curvature thereof decreased in the vicinity of the rear wheel brake actuator.

In an embodiment, the front wheel brake actuator may include a brake lever usable by the rider to make a brake operation on the front wheel, and a master cylinder converting an operational force applied to the brake lever into a liquid pressure.

With such an arrangement, the front wheel brake is actuated in response to the brake operation made by the rider.

In an embodiment, the rear wheel brake actuator may include a brake pedal to be stepped on by the rider, and an equalizer distributing the operational force, applied to the brake pedal, for the rear wheel brake and the combined brake cable.

With such an arrangement, the front wheel brake and the rear wheel brake are operated in a combined manner in response to an operation made by the rider on the brake pedal.

In an embodiment, the straddled vehicle may further include a cover covering at least a part of a side surface of the frame; the combined brake cable may include an outer tube; a wire inserted into the outer tube; and an adjusting bolt adjusting the length relationship between the outer tube and the wire; and the adjusting bolt may be located at a position, in the vehicle, to the rear of the position where the support member supports the combined brake cable and is not covered with the cover.

The adjusting bolt is located at a position easily contactable by a human from outside, so that the free play length of the combined brake cable is easily adjusted.

In an embodiment, the straddled vehicle may further include a clutch cable transmitting a clutch operation made by the rider to a clutch; and the combined brake cable and the clutch cable may be secured to each other at a position, in the vehicle, to the rear of the position where the support member supports the combined brake cable.

With such an arrangement, the change in the attitude of the combined brake cable caused by the rotation of the handle is decreased, and thus the fluctuation in the free play length of the combined brake cable is decreased.

In an embodiment, the straddled vehicle may further include a high tension cord supplying a high voltage for ignition to the engine; and the high tension cord may be routed to pass the first area.

Even in the case where the combined brake cable and the high tension cord, which is to be supplied with a high voltage, pass the first area, the combined brake cable is supported at a position to the side of the engine, so that a space is provided with certainty between the combined brake cable and the high tension cord to prevent occurrence of secondary current or corona discharge.

In an embodiment, the support member may be provided on a side surface of the engine, and support the combined brake cable at a position to the side of the engine.

With such an arrangement, a space is provided with certainty between the combined brake cable and the engine, so that it is made difficult for the heat of the engine to be transmitted to the combined brake cable.

Since the combined brake cable is supported at a middle position in the front-rear direction of the vehicle, it is easy to define the attitude of the combined brake cable. This makes it easy to set a free play length of the combined brake cable at the time of steering the handle.

In an embodiment, the straddled vehicle may further include a fuel tank located above the engine; and the support member may be provided below the fuel tank, and support the combined brake cable at a position to the side of the engine.

With such an arrangement, a space is provided with certainty between the combined brake cable and the engine, so that it is made difficult for the heat of the engine to be transmitted to the combined brake cable.

Since the combined brake cable is supported at a middle position in the front-rear direction of the vehicle, it is easy to define the attitude of the combined brake cable. This makes it easy to set a free play length of the combined brake cable at the time of steering the handle.

In an embodiment, the support member may be provided on the downtube, may extend from the downtube to a position to the side of the engine and may support the combined brake cable at a position to the side of the engine.

With such an arrangement, a space is provided with certainty between the combined brake cable and the engine, so that it is made difficult for the heat of the engine to be transmitted to the combined brake cable.

Since the combined brake cable is supported at a middle position in the front-rear direction of the vehicle, it is easy to define the attitude of the combined brake cable. This makes it easy to set a free play length of the combined brake cable at the time of steering the handle.

In an embodiment, the engine may be provided with a gas intake duct cooling the engine; and the support member may be provided on the gas intake duct, and support the combined brake cable at a position to the side of the engine.

With such an arrangement, a space is provided with certainty between the combined brake cable and the engine, so that it is made difficult for the heat of the engine to be transmitted to the combined brake cable.

Since the combined brake cable is supported at a middle position in the front-rear direction of the vehicle, it is easy to define the attitude of the combined brake cable. This makes it easy to set a free play length of the combined brake cable at the time of steering the handle.

In an embodiment, the front wheel brake actuator may include a brake lever usable by the rider to make a brake operation on the front wheel, a master cylinder converting an operational force applied to the brake lever into a liquid pressure, and a knocker transmitting the operational force applied to the brake lever to the master cylinder. The operational force applied to the rear wheel brake actuator may be transmitted to the knocker via the combined brake cable, and the knocker may be provided with a scale indicating a tolerable range of the free play length of the combined brake cable.

With such an arrangement, the free play length of the combined brake cable is easily adjusted visually.

### ADVANTAGEOUS EFFECTS OF INVENTION

In the straddled vehicle in an embodiment according to the present invention, the front wheel brake actuator actuating the front wheel brake is located in the first area (e.g., right region of the vehicle). The combined brake cable transmitting the operational force applied to the rear wheel brake actuator to the front wheel brake actuator is routed to pass the first area. With such an arrangement, a space in the first area, which is larger than the space in the vicinity of the head pipe, is usable as a space in which the combined brake cable is routed. The combined brake cable is bent downward to decrease the curvature thereof. In other words, the center of the curvature of the combined brake cable is located at a lower position, so that the curvature of the combined brake cable is decreased.

The combined brake cable is supported at a position to the side of the engine. In the case where the combined brake cable overlaps the engine as seen in a vehicle side view, the combined brake cable easily contacts the engine. In the case where the combined brake cable is supported at a position to the side of the engine, a space is provided with certainty between the combined brake cable and the engine, and thus the combined brake cable is prevented from contacting the engine. In addition, since the space is provided with certainty between the combined brake cable and the engine, it is made difficult for the heat of the engine to be transmitted to the combined brake cable.

Since the combined brake cable is supported at a middle position in a front-rear direction of the vehicle, it is easy to define the attitude of the combined brake cable. This makes it easy to set a free play length (play amount) of the combined brake cable at the time of steering the handle.

### BRIEF DESCRIPTION OF DRAWINGS

FIG. **1** is a side view showing a motorcycle in an embodiment according to the present invention.
FIG. **2** is a plan view showing the motorcycle in an embodiment according to the present invention.
FIG. **3** is an isometric view showing a combined brake system in an embodiment according to the present invention.
FIG. **4** is a side view showing the motorcycle in an embodiment according to the present invention.
FIG. **5** is an isometric view showing a support member in an embodiment according to the present invention.
FIG. **6** shows the combined brake cable and a clutch cable secured to each other in an embodiment according to the present invention.
FIG. **7** is a side view showing the motorcycle in an embodiment according to the present invention.
FIG. **8** is an isometric view showing the support member in an embodiment according to the present invention.
FIG. **9** is an isometric view showing a support member in an embodiment according to the present invention.
FIG. **10** is a side view showing a support member in an embodiment according to the present invention.
FIG. **11** shows a right side of a handle in an embodiment according to the present invention, as seen from below.

### DESCRIPTION OF EMBODIMENTS

Hereinafter, preferred embodiments of the present invention will be described with reference to the accompanying drawings. The following embodiments are mere examples, and the present invention is not limited to any of the following embodiments. In the description of the embodiments, like elements will bear like reference signs, and overlapping descriptions will be omitted.

As a straddled vehicle in an embodiment according to the present invention, a motorcycle will be described, for example. The "straddled vehicle" in an embodiment according to the present invention refers to a vehicle which a rider rides astride, and is not limited to a motorcycle described herein. The straddled vehicle in an embodiment according to the present invention may be, for example, a motor-tricycle that changes the advancing direction by having the vehicle body inclined.

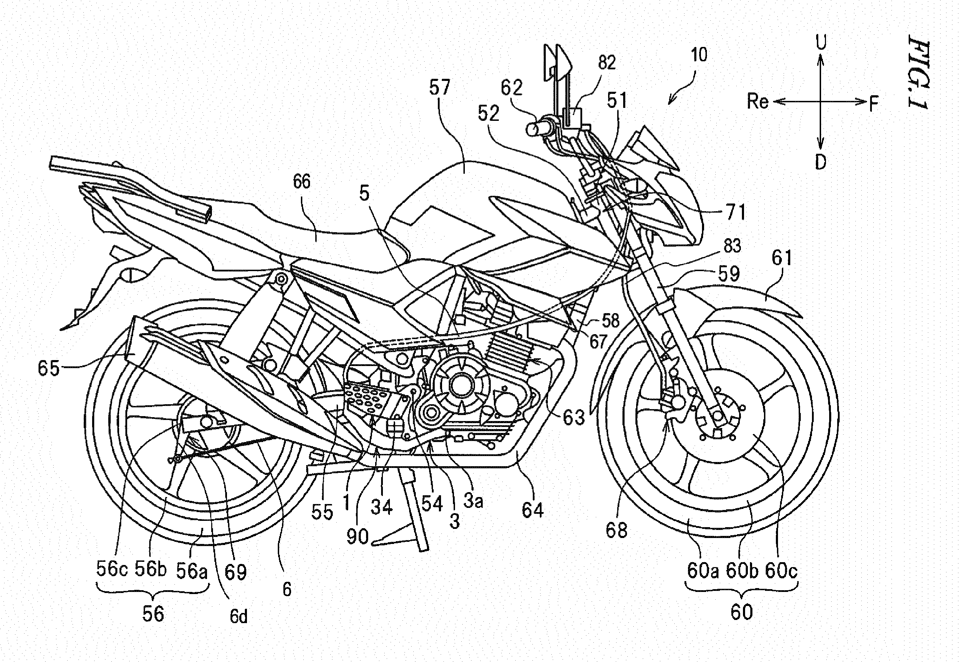

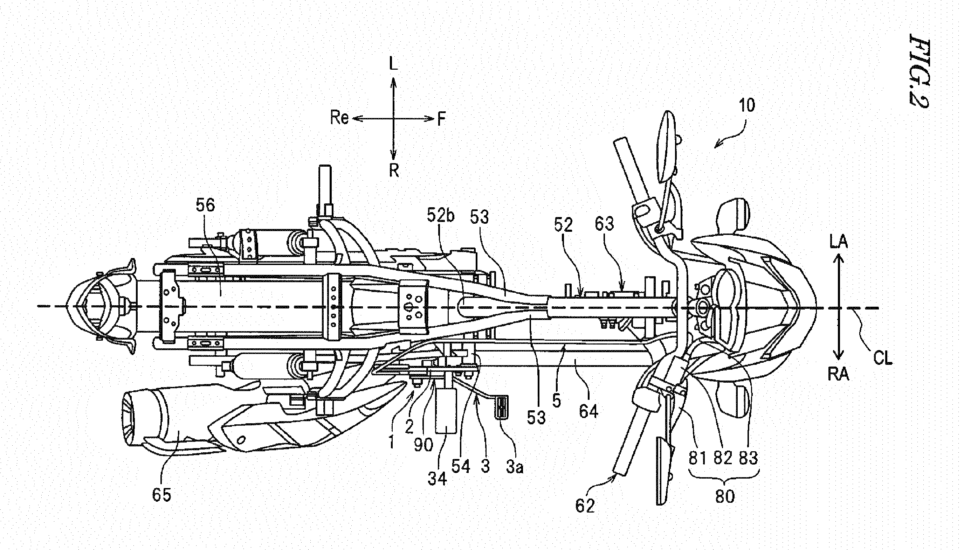

FIG. 1 is a right side view showing a motorcycle 10 in an embodiment according to the present invention. FIG. 2 is a plan view of a main portion of the motorcycle **10.** The motorcycle **10** includes a combined brake system **1.** The combined brake system **1** is a brake system that operates a front wheel brake **68** and a rear wheel brake **69** in a combined manner. In the following description, the terms "front", "rear", "left", "right", "up" and "down respectively refer to front, rear, left, right, up and down as seen from a rider sitting on a seat **66** of the motorcycle **10** unless otherwise specified. The "up" and "down" respectively refer to up and down in a state where the motorcycle **10** stands upright on a horizontal plane. In the figures, **F, Re, L, R, U** and **D** respectively represent front, rear, left, right, up and down.

As shown in FIG. **1****,** the motorcycle **10** includes a frame **71.** The frame **71** includes a head pipe **51,** a main frame **52** extending rearward from the head pipe **51,** and a downtube **58** extending obliquely rearward and downward from the head pipe **51.** In this embodiment, the frame **71** has a one-downtube frame structure including one downtube. The downtube **58** extends downward and rearward from the head pipe **51** so as to be at least partially located to the front of an engine 63. As shown in FIG. **2****,** the frame **71** includes a seat frame **53** extending rearward from a middle position of the main frame **52.**

As shown in FIG. **1****,** a fuel tank **57** is located to the rear of the head pipe **51.** The seat **66** is located to the rear of the fuel tank **57.** In FIG. **2****,** some of the components such as the fuel tank **57,** the seat **66** and the like are omitted. A handle **62** is located above the head pipe **51.** The handle **62** is supported so as to be pivotable about an axis of the head pipe **51.** The main frame **52** supports the engine **63** such that the engine **63** is below the main frame **52.** A discharge pipe **64** is attached to a front portion of the engine **63.** The discharge pipe **64** extends forward from the front portion of the engine **63,** is curved downward, and is further curved rearward. A muffler **65** is coupled to a rear portion of the discharge pipe **64.** At least a part of each of side surfaces of the frame **71** is covered with a cover **67.** Namely, at least a part of the frame **71** overlaps the cover **67** as seen in a vehicle side view, i.e., as seen in a width direction (left-right direction) of the vehicle **10.**

A front fork **59** is attached to the head pipe **51.** A front wheel **60** is supported at a bottom end of the front fork **59.** The front fork **59** acts as front wheel support members, which supports the front wheel **60.** The front wheel **60** is supported indirectly by the head pipe 51 via the front fork **59.** Namely, the front wheel **60** is rotatably supported indirectly by the frame **71** via the front fork **59.** A front fender **61** is located above the front wheel **60.** The front wheel **60** includes a tire **60a,** a wheel **60b** and a brake disc **60c.**

The combined brake system 1 includes a front wheel brake actuator **80** and a rear wheel brake actuator **90.** The front wheel brake actuator **80** includes a brake lever **81** provided to the right of the handle **62** and a master cylinder **82** located to the right of the handle **62.** The master cylinder **82** converts an operational force applied to the brake lever **81** into a liquid pressure. As seen in a vehicle plan view, the front wheel brake actuator **80** is located in a right area **RA,** among the right area (first area) **RA** and a left area (second area) **LA** separated from each other as being to the right of, and to the left of, a vehicle center line **CL** extending in a front-rear direction of the vehicle while passing the center in the vehicle width direction. The right area **RA** is a right region of the vehicle **10,** whereas the left area **LA** is a left region of the vehicle **10.**

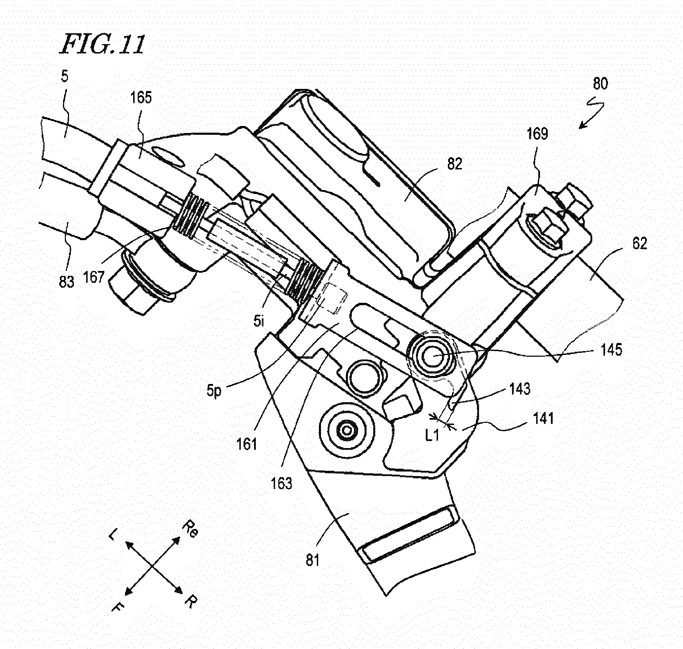

The front wheel brake (brake caliper) **68** is in communication with the master cylinder **82** via a brake hose **83.** As shown in FIG. **1****,** the front wheel brake **68** is located in the vicinity of the front wheel **60.** The front wheel brake **68** is supported by the front fork **59,** which acts as front wheel support members. The front wheel brake **68** is not limited to being provided in this manner. The front wheel brake **68** brakes the front wheel **60.** In this example, the front wheel brake actuator **80** includes a knocker **141** (FIG. **11**). The brake lever **81** is grabbed by the rider, so that the oil pressure of brake oil in the master cylinder **82** is changed via the knocker **141.** Such a change in the oil pressure is transmitted to the front wheel brake **68,** and the front wheel brake **68** brakes the brake disc **60c** of the front wheel **60.** Since the brake system in this embodiment is a combined brake system, the front wheel brake **68** brakes the front wheel **60** also by an actuation of the rear wheel brake actuator **90** (described in detail below). In this embodiment, the front wheel brake **68** is a hydraulic disc brake as described above. The present invention is not limited to this, and the front wheel brake **68** may be a hydraulic brake of any other system, or may be a brake other than the hydraulic brake. The master cylinder **82** is located above the engine **63.**

A bottom portion **52b** (FIG. **2**) of the main frame **52** includes a pivot shaft (not shown). A front end of a rear arm **55** (FIG. **1**) is supported by the pivot shaft so as to be swingable upward and downward. As shown in FIG. **1****,** a rear wheel **56** is supported by a rear end of the rear arm **55.** The rear wheel **56** is supported indirectly by the main frame **52** via the rear arm **55.** Namely, the rear wheel **56** is rotatably supported indirectly by the frame **71** via the rear arm **55.** The rear wheel **56** includes a tire **56a,** a wheel **56b** and a brake drum **56c.**

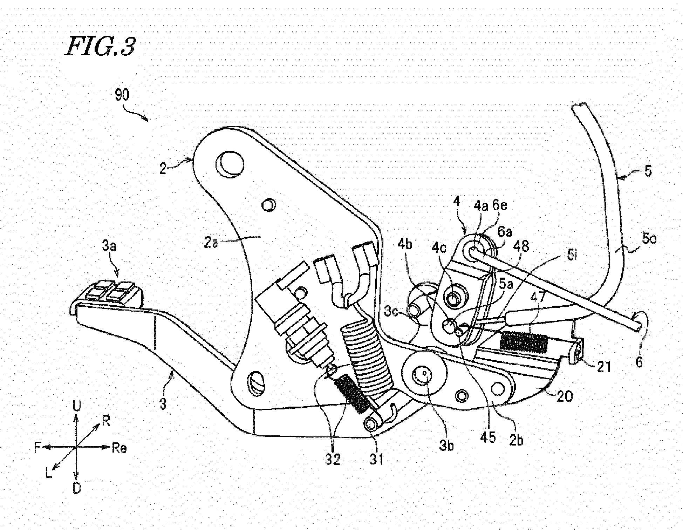

FIG. **3** is an isometric view showing the rear wheel brake actuator **90.** The rear wheel brake actuator **90** is provided to the rear of, and below, the front wheel brake actuator, and actuates the rear wheel brake in response to an operation made by the rider. As shown in FIG. **1** through FIG. **3****,** the rear wheel brake actuator **90** includes a brake pedal **3,** an equalizer **4** pivotably supported by the brake pedal **3,** a brake rod **6** connected with the equalizer **4,** a brake arm **6d** connected with the brake rod **6,** and the rear wheel brake (brake caliper) **69** coupled with the brake arm **6d.** The brake pedal **3** to be stepped on by the rider is located in the right region of the vehicle **10.** The equalizer **4** distributes an operational force, applied by the rider's right foot stepping on the brake pedal **3,** for the front wheel brake **68** and the rear wheel brake **69.**

As shown in FIG. **1****,** the rear wheel brake **69** is located in the vicinity of the rear wheel **56.** The rear wheel brake **69** is supported by the rear arm **55.** The rear wheel brake **69** is not limited to be provided in this manner. The rear wheel brake **69** brakes the rear wheel **56.** The rear wheel brake actuator **90** functions such that the brake pedal **3** is stepped on by the rider to cause the brake rod **6** to pivot the brake arm **6d** via the equalizer **4.** The pivoting of the brake arm **6d** causes a cam (not shown) to put the rear wheel brake **69** into contact with the brake drum **56c** to brake the brake drum **56c.** In this embodiment, the rear wheel brake **69** is a mechanical drum brake as described above. The present invention is not limited to this, and the rear wheel brake **69** may be of any other system.

Now, the equalizer **4** and components in the vicinity thereof will be described in detail. As shown in FIG. **3****,** the combined brake system **1** includes a bracket **2,** the brake pedal **3,** the equalizer **4,** a combined brake cable **5,** and the brake rod **6.**

As shown in FIG. **2****,** a coupling member **54** extending in the vehicle width direction is formed on the bottom portion **52b** of the main frame **52.** The bracket **2** is coupled with the coupling member **54.** Namely, the bracket **2** is coupled with the frame **71.** The bracket **2** is located to the rear of the front wheel **60** and to the front of the rear wheel **56** as seen in a vehicle side view. There is no specific limitation on the shape of the bracket **2.** As shown in FIG. **3****,** the bracket **2** is formed of a plate-like member in this embodiment. The bracket **2** is located upright. The bracket **2** includes a main body **2a** and a rear member **2b** extending rearward from the main body **2a.**

The brake pedal **3** extends in the front-rear direction of the vehicle. The brake pedal **3** includes a step **3a** to be stepped on by the rider. The brake pedal **3** includes a pivoting shaft **3b** located to the rear of the step **3a** and a top arm **3c** located above the pivoting shaft **3b.** The pivoting shaft **3b** is provided to run through the rear member **2b** of the bracket **2.** The step **3a,** which acts as the point of effort, is located to the front of the pivoting shaft **3b.** The top arm 3c, which acts as the point of load when a force is applied to the step **3a** by the rider, is located above the pivoting shaft **3b.** The brake pedal **3** is pivotable about the pivoting shaft **3b.**

The rider puts his/her heel on a foot rest **34** (FIG. **2**) and puts his/her toe on the step **3a** to operate the brake pedal **3** by his/her foot. When the rider steps on the step **3a** downward, the brake pedal **3** is pivoted about the pivoting shaft **3b.** At this point, the top arm **3c** is moved forward.

The equalizer **4** includes a top connector **4a,** a bottom connector **4b,** a pivoting shaft **4c** and a main body **48.** The top connector **4a** is located above the pivoting shaft **4c.** The bottom connector **4b** is located below the pivoting shaft **4c.** The pivoting shaft **4c** is located above the pivoting shaft **3b.** The pivoting shaft **4c** is located to run through the top arm **3c** of the brake pedal **3.** The equalizer **4** is supported by the top arm **3c** of the brake pedal **3** so as to be pivotable about the pivoting shaft **4c.** As described above, when the rider steps on the step **3a,** the top arm **3c** moves forward. Therefore, when the rider steps on the step **3a,** the equalizer **4** moves forward.

The combined brake cable **5** is connected with the front wheel brake actuator **80** and with the rear wheel brake actuator **90,** and transmits an operational force applied to the rear wheel brake actuator **90** to the front wheel brake actuator **80.** The combined brake cable **5** includes a flexible member, for example, a metal wire. There is no specific limitation on the structure of the combined brake cable **5.** In this embodiment, the combined brake cable **5** includes an outer tube **5o,** a wire **5i** inserted into the outer tube **5o,** and a pin **5a** formed at a tip of the wire **5i.** The pin **5a** is connected with the bottom connector **4b** of the equalizer **4.** The combined brake cable **5** and the bottom connector **4b** of the equalizer **4** are not limited to being connected with each other by the above-described structure, and may be connected by any other structure.

The combined brake cable **5** extending from the pin **5a** passes a region below the brake rod **6** and extends rearward as seen in a vehicle side view, and then is curved upward and is further curved forward. As shown in FIG. 1 and FIG. **2****,** the combined brake cable **5** extending forward from the rear wheel brake actuator **90** passes a side portion of the vehicle **10** and is connected with the front wheel brake actuator **80.** When being pulled forward by the movement of the equalizer **4,** the combined brake cable **5** actuates the front brake **68** via the master cylinder **82** and the brake hose **83.**

As shown in FIG. **3****,** the brake rod **6** is, for example, a non-flexible rod-like member. A connector **6a** of the brake rod **6** is connected with the top connector **4a** of the equalizer **4.** In this embodiment, the connector **6a** is a tip of the rod curved rightward, and is connected with the top connector **4a** via a washer **6e.**

The brake rod **6** extends rearward from the connector **6a,** and is connected with the brake arm **6d** (FIG. **1**). When being pulled forward by the movement of the equalizer **4,** the brake rod **6** actuates the rear brake **69** via the brake arm **6d.**

A bracket connector **20** is attached to the rear member **2b** of the bracket **2.** The bracket connector **20** is formed of a plate-like member, and is provided with a hook **21** formed to protrude leftward. A spring **47** is connected with a bobbin **45** of the equalizer **4** and also with the hook **21.** The spring **47** loads the equalizer **4** rearward.

The brake pedal **3** is provided with a shaft-like connection pin **31.** The connection pin **31** extends leftward. The connection pin **31** is located on a portion of the brake pedal **3** that is below the bracket **2.** A plurality of springs **32** are connected with the bracket **2** and with the connection pin **31.** The springs **32** load the brake pedal **3** in such a direction as to raise the step **3a.**

When the rider steps on the step **3a** of the brake pedal **3** downward against the loading force of the springs **32,** the brake pedal **3** is pivoted about the pivoting shaft **3b,** and the top arm **3c** is moved forward. This causes the top connector **4a** and the bottom connector **4b** of the equalizer **4** to move forward against the loading force of the spring **47.** This causes the brake rod **6** connected with the top connector **4a** of the equalizer **4** to be pulled forward, and also causes the combined brake cable **5** connected with the bottom connector **4b** to be pulled forward. As a result, The front wheel brake **68** and the rear wheel brake **69** are actuated in a combined manner. In this manner, the combined brakes are realized. As described above, separately from the actuation of the combined brakes, the rider grabs the brake lever **81** to provide a predetermined braking force on the front wheel brake **68,** needless to say.

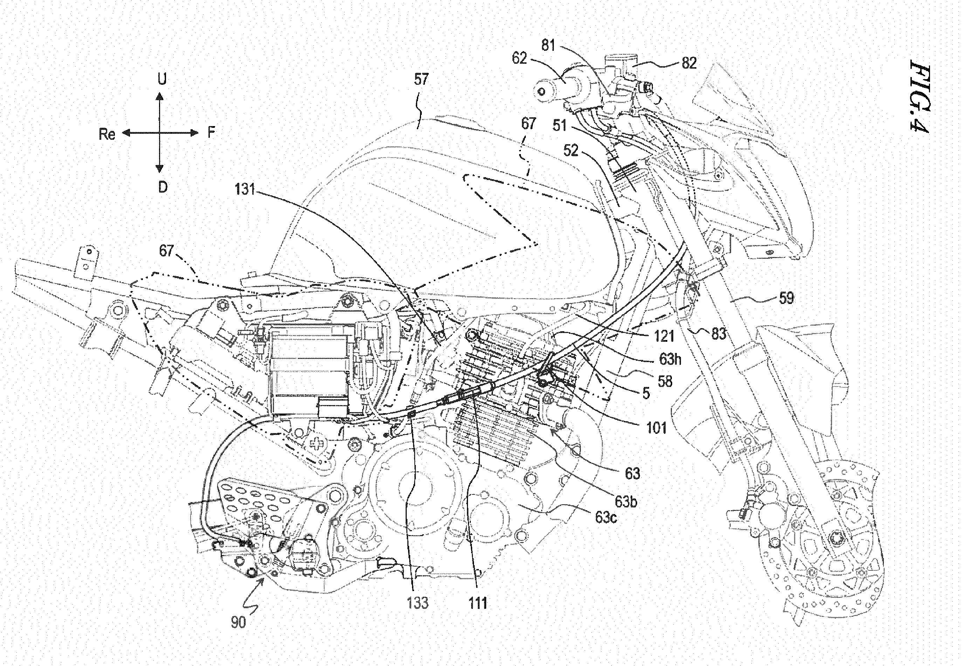

Now, the routing of the combined brake cable 5 will be described in more detail. FIG. **4** is a right side view showing a main portion of the motorcycle **10.** For easier understanding, some of the elements are shown as being transparent. As described above with reference to FIG. **3****,** the equalizer **4** distributes an operational force, applied by the rider stepping on the brake pedal **3,** for the front wheel brake **68** and the rear wheel brake **69.** The combined brake cable **5** transmits the operational force distributed by the equalizer **4** to the front wheel brake actuator **80.** The combined brake cable **5** passes the right region of the motorcycle **10,** in which the brake pedal **3** and the equalizer **4** are also located, and extends toward the handle **62** from the equalizer **4.**

More specifically, the combined brake cable **5** extends forward from the front wheel brake actuator **80** (master cylinder **82**). The combined brake cable **5** extends downward from the front wheel brake actuator **80** (master cylinder **82**). The combined brake cable **5** extends to a position to the front of two branches of the front fork **59** and then extends rearward. The combined brake cable **5** passes between the two branches of the front fork **59** from a position to the front of the two branches of the front fork **59,** and extends rearward. The combined brake cable **5** extends downward from the position to the front of the two branches of the front fork **59.** In other words, the combined brake cable **5** extends rearward and downward from a position to the front of the engine **63.** Then, the combined brake cable **5** extends substantially horizontally from a position in the vicinity of a rear end, in the front-rear direction, of the engine **63** (crankcase), and is bent downward. The, the combined brake cable **5** extends forward from a position to the rear of the brake pedal **3,** and then is connected with the equalizer **4.** As shown in FIG. **4****,** the combined brake cable **5** partially overlaps the engine **63** as seen in a side view. In more detail, the combined brake cable **5** partially overlaps a cylinder block **63b** as seen in the side view.

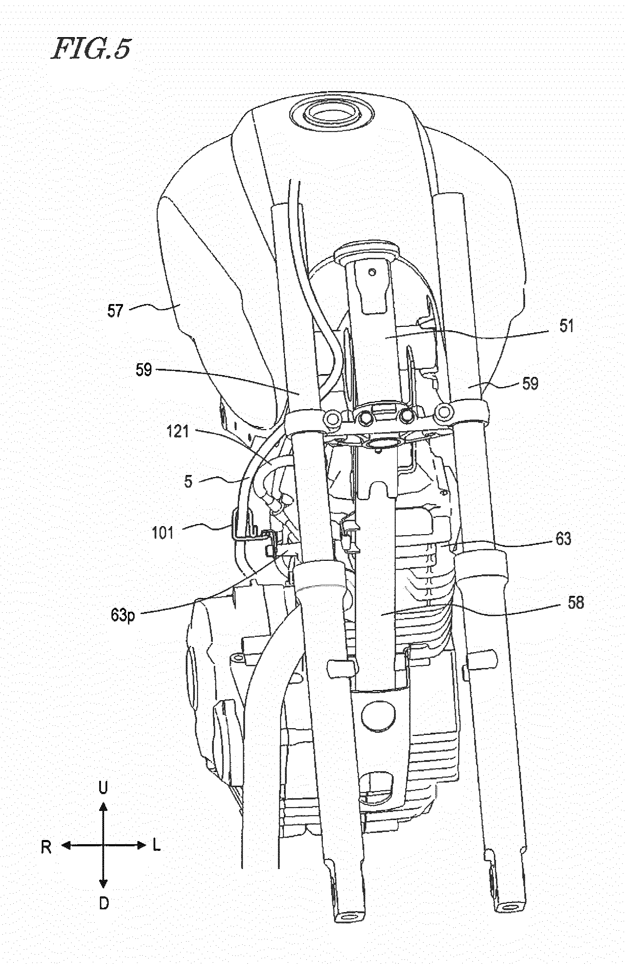

In this embodiment, the motorcycle **10** includes a support member **101** supporting the combined brake cable **5,** passing the right region of the motorcycle **10,** at a position to the side of the engine **63.** FIG. **5** is an isometric view showing the support member **101.** As shown in FIG. **4** and FIG. **5****,** the engine **63** in this embodiment includes a protrusion **63p** protruding rightward from a right side surface thereof. The support member **101** is secured to the protrusion **63p.** The support member **101** may be secured to the protrusion **63p** by any method, for example, welding, use of a bolt, or the like. The support member **101** has a ring shape larger than a cross-section of the combined brake cable **5.** The combined brake cable **5** passes through the ring shape, so as to be supported by the support member **101.** The combined brake cable **5** may be supported so as to be slidable in the support member **101** in the front-rear direction as in this example, or so as to be secured to the support member **101.**

In this embodiment, the combined brake cable **5** is routed to pass the right region of the vehicle **10,** and is supported at a position to the side of the engine **63.** This may decrease the change in the attitude of the combined brake cable **5** caused by the rotation of the handle **62,** and thus may decrease the fluctuation in a free play length (play amount) of the combined brake cable **5.**

Herein, the "position to the side of the engine **63"** refers to a position overlapping the engine **63** as seen in a vehicle side view (in a projection of the vehicle as seen from the side thereof). In this embodiment, the position to the side of the engine **63** refers to a position overlapping a cylinder head **63h,** the cylinder block **63b,** and a crankcase **63c** or a cooling fin provided in the cylinder head **63h,** the cylinder block **63b** or the crankcase 63c as seen in a vehicle side view.

As a result of the active studies, the present inventors conceived the following: in the case where the handle **62** is rotated in an embodiment in which the combined brake cable **5** passes the right region of the vehicle **10,** if the combined brake cable **5** significantly moves in an up-down direction, the fluctuation in the free play length of the combined brake cable **5** is increased. In this embodiment, the combined brake cable **5** is supported at a position to the side of the engine **63,** so that the movement of the combined brake cable **5** in the up-down direction is suppressed, and thus the fluctuation in the free play length of the combined brake cable **5** is decreased. Since the combined brake cable **5** is supported at a position to the side of the engine **63,** the curvature of the combined brake cable **5** extending toward the handle **62** is decreased, and thus the fluctuation in the free play length of the combined brake cable **5** is decreased.

In this embodiment, the front wheel brake actuator **80** is located in the right region of the vehicle **10.** The combined brake cable **5** is routed to pass the right region of the vehicle **10.** With such an arrangement, a space in the right region of the vehicle **10,** which is larger than the space in the vicinity of the head pipe **51,** is usable as a space in which the combined brake cable **5** is routed. The combined brake cable **5** is bent downward to decrease the curvature thereof. In other words, the center of the curvature of the combined brake cable **5** is located at a lower position, so that the curvature of the combined brake cable **5** is decreased. This improves the operability of the brakes and also improves the routing workability. This also decreases the fluctuation in the free play length of the combined brake cable **5.**

Since the combined brake cable **5** is supported at a middle position in the front-rear direction of the vehicle, it is easy to define the attitude of the combined brake cable **5.** This makes it easy to set the free play length of the combined brake cable **5** at the time of steering the handle.

The support member **101** is located to the side of the engine 63 and supports the combined brake cable **5,** so that a space is provided with certainty between the combined brake cable **5** and the engine **63,** and thus it is made difficult for the heat of the engine **63** to be transmitted to the combined brake cable **5.**

In the case where the combined brake cable **5** overlaps the engine **63** (e.g., the cylinder of the engine **63**) as seen in a vehicle side view, the combined brake cable **5** easily contacts the engine **63.** However, in this embodiment, the combined brake cable **5** is supported at a position to the side of the engine **63,** so that a space is provided with certainty between the combined brake cable **5** and the engine **63,** and thus the combined brake cable **5** is prevented from contacting the engine **63.**

While the handle **62** is not steered, namely, while the handle is at such a position that the vehicle 10 advances straight as shown in FIG. **2****,** a portion of the combined brake cable **5** that overlaps the engine **63** as seen in a vehicle side view is located such that a front end thereof is above a rear end thereof. In the wire-type combined brake system, rainwater may enter an area between the outer tube **5o** and the wire **5i** of the combined brake cable **5** in the case where a certain sealing method is adopted. The combined brake cable **5** extends downward and rearward from a front portion of the vehicle. If there is a portion of the combined brake cable **5** in which a rear portion is located at a higher position than that of a front portion (if there is a portion hanging in a U-shape protruding downward), water is stored in such a portion and it is made difficult to discharge the water from the rear portion of the combined brake cable **5.** However, in this embodiment, the portion of the combined brake cable **5** that overlaps the engine **63** is located such that the front end thereof is above the rear end thereof. Therefore, such a portion where water is easily stored is suppressed from being formed. Water, even if entering, is easily discharged.

The combined brake cable **5** extends forward in the vehicle from a position thereof connected with the front wheel brake actuator **80** provided on the handle **62,** then is bent downward, and extends rearward. In this manner, the combined brake cable **5** extends forward and then is bent downward, so as to have the curvature thereof further decreased.

As shown in FIG. **5****,** the combined brake cable **5** passes between the two branches of the front fork **59** and extends rearward. The combined brake cable **5** passes between the branches of the front fork **59,** so as to be suppressed from moving in the vehicle width direction and so as to have the attitude thereof stabilized.

A high tension cord **121** supplying a high voltage for ignition is routed for the engine **63.** The high tension cord **121** may pass the right region of the vehicle **10,** like the combined brake cable **5.** Even in such a case, in this embodiment, the combined brake cable **5** is supported by the support member **101** located to the side of the engine **63** to provide a space with certainty between the combined brake cable **5** and the high tension cord **121**. The space provided with certainty between the combined brake cable **5** and the high tension cord **121**, which is to be supplied with a high voltage, prevents occurrence of secondary current or corona discharge.

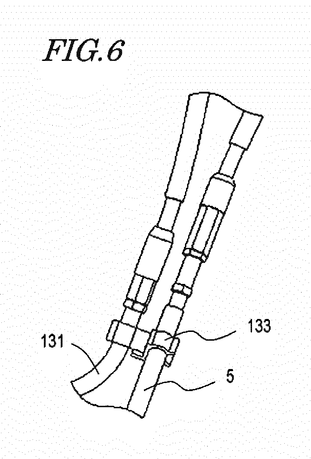

As shown in FIG. **4****,** the motorcycle **10** in this embodiment further includes a clutch cable **131** transmitting a clutch operation made by the rider to a clutch. In an embodiment in which the clutch cable **131** is routed as passing the right region of the vehicle **10** like the combined brake cable **5,** the combined brake cable **5** and the clutch cable **131** may be secured to each other. FIG. **6** shows a clamp **133** securing the combined brake cable **5** and the clutch cable **131** to each other. The clamp **133** holds the combined brake cable **5** and the clutch cable **131,** so that the combined brake cable **5** and the clutch cable **131** are secured to each other. As in this example, the combined brake cable **5** and the clutch cable **131** may be secured to each other at a position, in the vehicle **10,** to the rear of the position where the support member **101** supports the combined brake cable **5,** so that the change in the attitude of the combined brake cable 5 caused by the rotation of the handle **62** is further decreased, and thus the fluctuation in the free play length of the combined brake cable **5** is further decreased.

Now, an adjusting bolt **111** usable to adjust the free play length of the combined brake cable **5** will be described. As described above, the combined brake cable **5** includes the outer tube **5o** and the wire **5i** inserted into the outer tube **5o.** As shown in FIG. **4****,** the combined brake cable **5** in this embodiment further includes the adjusting bolt 111 adjusting the length relationship between the outer tube **5o** and the wire **5i.** The adjusting bolt **111** changes the length of the outer tube **5o** to adjust the length of a portion of the wire **5i** that is exposed from the outer tube **5o,** so that the free play length of the combined brake cable **5** is adjusted. In this embodiment, the adjusting bolt **111** is located at a position, in the vehicle **10,** which is to the rear of the position where the support member 101 supports the combined brake cable **5** and which is not covered with the cover **67.** In FIG. **4****,** the cover **67** is represented by the two-dot chain line. The adjusting bolt **111** is located at a position not overlapping the cover **67** as seen in a vehicle side view, namely, as seen in the width direction of the vehicle 10. In this manner, the adjusting bolt **111** is located at a position easily contactable by a human from outside, so that the free play length of the combined brake cable **5** is easily adjusted.

As shown in FIG. **3** and FIG. **4****,** the combined brake cable **5** extending rearward from the front portion in the vehicle **10** is curved at a position to the rear of the rear wheel brake actuator **90** and then extends forward to be connected with the rear wheel brake actuator **90.** In this manner, the combined brake cable **5** is curved at a position to the rear of the rear wheel brake actuator **90** and then extends forward, so as to have the curvature thereof decreased in the vicinity of the rear wheel brake actuator **90.** This further improves the operability of the brakes and also further improves the routing workability.

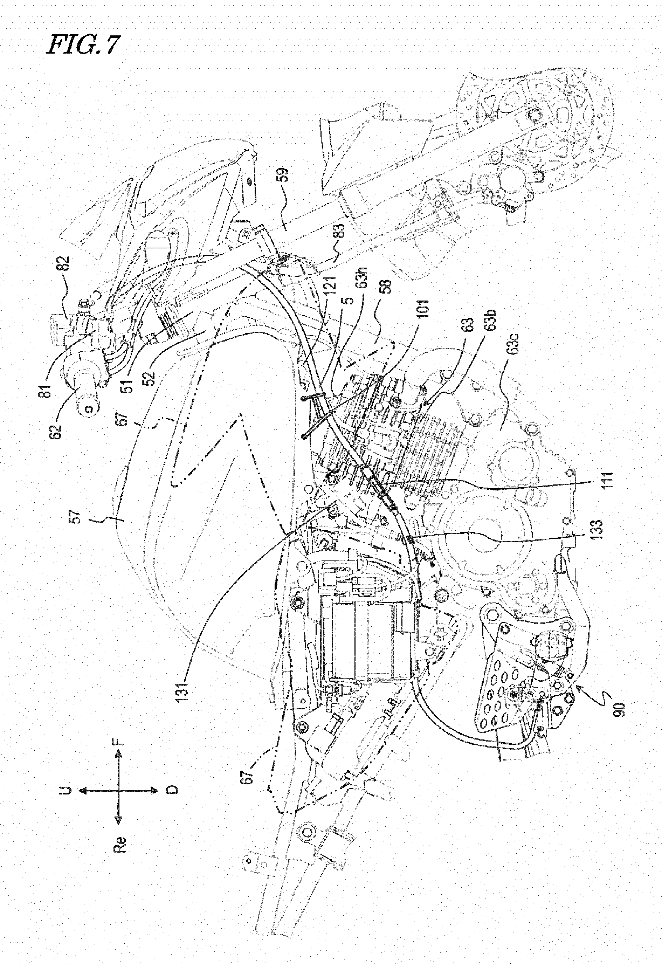

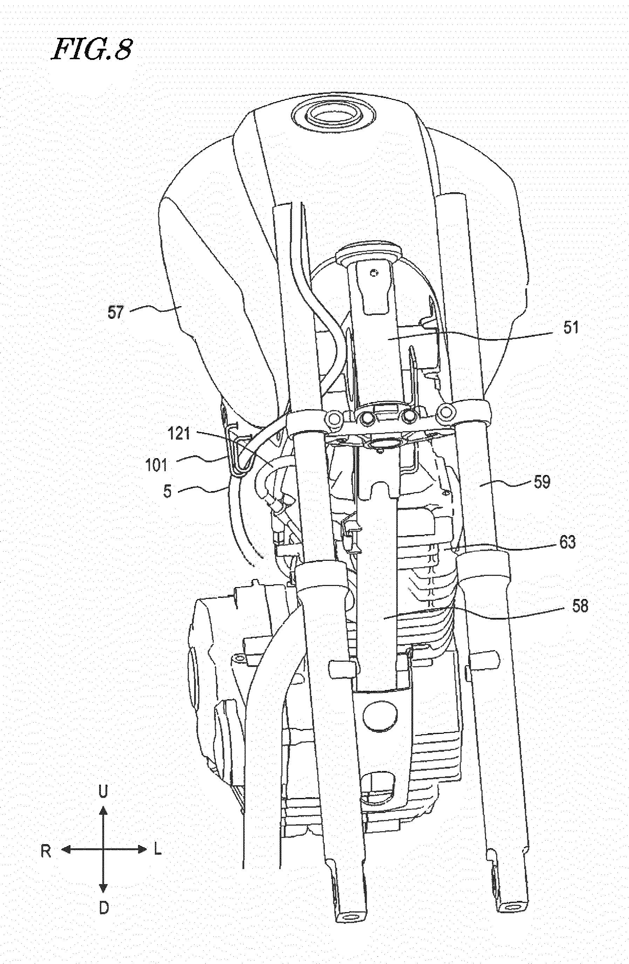

In the above-described example, the support member **101** is secured to the protrusion **63p** protruding rightward from the side surface of the engine **63**. The support member **101** is not limited to being provided in this manner. It is sufficient that the support member **101** is located so as to support the combined brake cable **5** at a position to the side of the engine **63.** For example, the support member **101** may be secured below the fuel tank **57** and support the combined brake cable **5** at a position to the side of the engine **63.** FIG. **7** is a right side view showing a main portion of the motorcycle **10,** and FIG. **8** is an isometric view showing the support member **101.** The fuel tank **57** is located above the engine **63.** In the example shown in FIG. **7** and FIG. **8****,** the support member **101** is secured below the fuel tank **57** while a ring-shaped portion extending from the secured portion is located to the side of the engine **63** to support the combined brake cabler **5.** The support member **101** secured below the fuel tank **57** in this manner may be used to support the combined brake cabler **5** at a position to the side of the engine **63,** so that substantially the same effect as described above is provided.

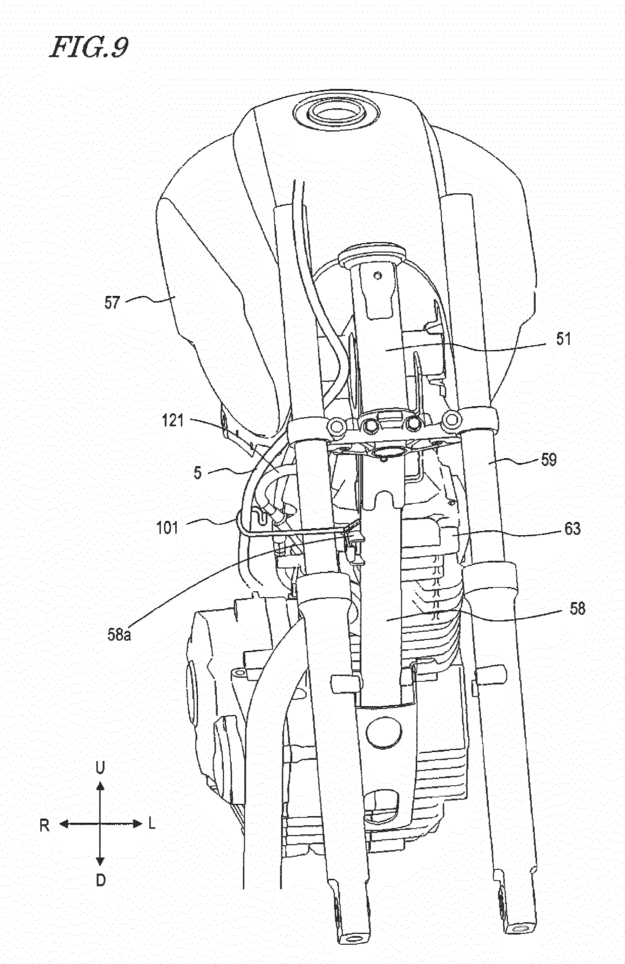

FIG. **9** is an isometric view showing another embodiment of the support member **101.** In the example shown in FIG. **9****,** the support member **101** is secured to a connection member **58a** on a side surface of the downtube **58,** and extends from this secured portion to a position to the side of the engine **63** to support the combined brake cable **5.** The support member **101** extending from the downtube **58** to a position to the side of the engine **63** in this manner may be used to support the combined brake cable **5** at a position to the side of the engine **63,** so that substantially the same effect as described above is provided. The support member **101** may be ring-shaped as shown in FIG. **5** or FIG. **8****,** or may be hooked as shown in FIG. **9****.** The support member **101** is not limited to having any of the above-described shapes, and may be of any shape with which the combined brake cable **5** may be supported.

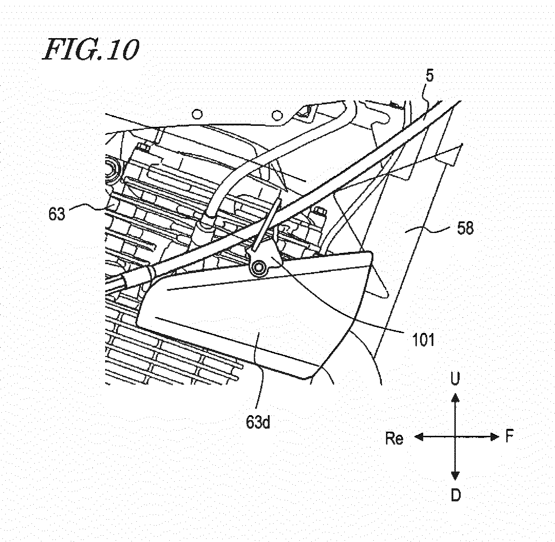

FIG. **10** is a right side view showing a main portion of the motorcycle **10,** more specifically, showing still another embodiment of the support member **101.** In the example shown in FIG. **10****,** a gas intake duct **63d** for cooling the engine **63** is provided to the right of the engine **63.** In this example, the support member **101** is secured to the gas intake duct **63d,** and supports the combined brake cable **5** at a position to the side of the engine **63.** The support member **101** secured to the gas intake duct **63d** in this manner may be used to support the combined brake cable **5** at a position to the side of the engine **63,** so that substantially the same effect as described above is provided.

Now, a knocker pressing the master cylinder **82** provided to the right of the handle **62** of the motorcycle **10** and components in the vicinity thereof will be described. FIG. **11** shows a right side of the handle **62** as seen from below. The master cylinder **82** is secured to the handle **62** by a securing member **169.** The securing member **169** is attached such that the brake lever **81** and the knocker **141** are rotatable. The knocker **141** is a pressing member that presses a piston of the master cylinder **82** in response to, for example, an operation made on the brake lever **81.** An operational force applied to the brake lever **81** by the rider is transmitted to the master cylinder **82** via the knocker **141.** The master cylinder **82** converts the applied operational force into a liquid pressure. A change in the liquid pressure is transmitted to the front wheel brake **68** via the brake hose **83,** and brakes the front wheel **60.**

The outer tube **5o** of the combined brake cable **5** routed as passing the right region of the motorcycle **10** is secured by a stopper **165,** and the wire **5i** is exposed from the secured portion. The wire **5i** of the combined brake cable **5** is connected with the knocker **141** via a connection member **161.** The connection member **161** has an elliptical slit **163** formed therein, and a pin **145** provided on the knocker **141** runs through the slit **163.** With such an arrangement, the connection member **161** is slidable with respect to the knocker **141.** An end of the connection member **161** is connected with the wire **5i** of the combined brake cable **5.** The connection member **161** is connected so as to be slidable with respect to the knocker **141.** Thus, when an operational force provided by an operation made on the brake lever **81** is transmitted to the knocker **141,** the wire **5i** is prevented from being pressed by the knocker **141.**

When the rider steps on the brake pedal **3** (FIG. **3**), an operational force distributed by the equalizer **4** is transmitted via the combined brake cable **5.** At this point, a pin **5p** at a tip of the wire **5i** contacts, and pulls, the connection member **161,** so that the operational force is transmitted to the knocker **141.** The knocker **141** presses the piston of the master cylinder **82** in accordance with the operational force, and the operational force is converted into a liquid pressure. A change in the liquid pressure is transmitted to the front wheel brake **68** via the brake hose **83,** and brakes the front wheel **60.** A spring **167** is provided between the stopper **165** and the connection member **161,** and loads the connection member **161** in a direction away from the stopper **165.**

In this embodiment, a marker **143** indicating a tolerable range of the free play length of the combined brake cable **5** is provided on the knocker **141.** In the example shown in FIG. **11****,** width **L1** of the marker **143** shows the free play length.

When the adjusting bolt **111** described above is operated, the length of a portion (free play length) of the wire **5i** that is exposed from the outer tube **5o** secured by the stopper **165** is changed. The position of the connection member **161** varies in accordance with the length of the exposed portion of the wire **5i.** At this point, the adjusting bolt **111** is operated such that an end of the connection member **161** is within the width **L1** of the marker **143,** so that the free play length is adjusted to be an appropriate value. In this manner, the marker **143** showing an adjustable range of the free play length is provided on the knocker **141,** so that an appropriate adjustable range is easily checked visually. A scale may be provided on the knocker **141** instead of the marker **143.** In this case also, an appropriate adjustable range of the free play length may be easily checked visually.

In the above-described embodiment, the front wheel brake actuator **80** and the combined brake cable **5** are located in the right region, which is one of two regions separated from each other as being to the right of, and to the left of, the vehicle center line **CL** as seen in a vehicle plan view. Alternatively, the front wheel brake actuator **80** and the combined brake cable **5** may be located in the left region.

### INDUSTRIAL APPLICABILITY

The present invention is especially useful in the field of a straddled vehicle including a combined brake system.

### REFERENCE SIGNS LIST

- **1**: combined brake system
- **3**: brake pedal
- **4**: equalizer
- **5**: combined brake cable
- **5a, 5p**: pin
- **5o**: outer tube
- **5i**: wire
- **10**: motorcycle (straddled vehicle)
- **56**: rear wheel
- **60**: front wheel
- **57**: fuel tank
- **58**: downtube
- **62**: handle
- **63**: engine
- **63b**: cylinder block
- **63c**: crankcase
- **63d**: gas intake duct
- **63h**: cylinder head
- **63p**: protrusion
- **67**: cover
- **68**: front wheel brake
- **69**: rear wheel brake
- **71**: frame
- **80**: front wheel brake actuator
- **81**: brake lever
- **82**: master cylinder
- **90**: rear wheel brake actuator
- **101**: support member
- **111**: adjusting bolt
- **121**: high tension cord
- **131**: clutch cable
- **133**: clamp
- **141**: knocker
- **143**: marker (scale)
- **145**: pin
- **161**: connection member
- **163**: slit
- **165**: stopper
- **167**: spring
- **169**: securing member

## Claims

1. A straddled vehicle (10), comprising:
a frame (71) including a head pipe (51);
a front wheel (60) and a rear wheel (56) rotatably supported by the frame (71);
a handle (62) supported so as to be rotatable about an axis of the head pipe (51);
an engine (63) supported by the frame (71); and
a combined brake system (1) including a front wheel brake (68) braking the front wheel (60) and a rear wheel brake (69) braking the rear wheel (56), the combined brake system (1) operating the front wheel brake (68) and the rear wheel brake (69) in a combined manner;
wherein:
the frame (71) includes:
a main frame (52) extending rearward from the head pipe (51), the main frame (52) supporting the engine (63) such that the engine (63) is below the main frame (52); and
one downtube (58) extending downward and rearward from the head pipe (51) so as to be at least partially located to the front of the engine (63);
the combined brake system (1) includes:
a front wheel brake actuator (80) provided on the handle, the front wheel brake actuator (80) actuating the front wheel brake (68) in response to an operation made by a rider;
a rear wheel brake actuator (90) provided to the rear of, and below, the front wheel brake actuator (80), the rear wheel brake actuator (90) actuating the rear wheel brake (69) in response to an operation made by the rider; and
a combined brake cable (5) connected with the front wheel brake actuator (80) and with the rear wheel brake actuator (90), the combined brake cable (5) transmitting an operational force applied to the rear wheel brake actuator (90) to the front wheel brake actuator (80); and
the front wheel brake actuator (80) is located in a first area (RA;LA), which is one of two areas separated from each other as being to the right of, and to the left of, a vehicle center line (CL) as seen in a vehicle plan view,
**characterized in that**
the combined brake cable (5) is routed in the first area (RA;LA), and at least partially overlaps the engine (63) as seen in a vehicle side view; and
the straddled vehicle (10) further includes a support member (101) supporting the combined brake cable (5) at a position to the side of the engine (63).

2. The straddled vehicle (10) of claim 1, wherein the combined brake cable (5) at least partially extends downward and rearward from a position to the front of the engine (63).

3. The straddled vehicle (10) of claim 1 or 2, wherein the combined brake cable (5) overlaps a cylinder of the engine (63) as seen in a vehicle side view.

4. The straddled vehicle (10) of any one of claims 1 through 3, wherein the rear wheel brake actuator (90) is located in the first area (RA;LA).

5. The straddled vehicle (10) of any one of claims 1 through 4, wherein:
the combined brake cable (5) overlaps the engine (63) as seen in a vehicle side view; and
while the handle (62) is not steered, a portion, of the combined brake cable (5), overlapping the engine (63) is located such that a front end thereof is above a rear end thereof.

6. The straddled vehicle (10) of any one of claims 1 through 5, wherein the combined brake cable (5) extends forward from a position thereof connected with the front wheel brake actuator (80), then is bent downward, and extends rearward.

7. The straddled vehicle (10) of claim 6, further comprising a plurality of front wheel support members (59) supporting the front wheel (60);
wherein the combined brake cable (5) passes between the plurality of front wheel support members (59).

8. The straddled vehicle (10) of claim 6 or 7, wherein the combined brake cable (5) is curved at a position to the rear of the rear wheel brake actuator (90) and then extends forward to be connected with the rear wheel brake actuator (90).

9. The straddled vehicle (10) of any one of claims 1 through 8, further comprising a cover (67) covering at least a part of a side surface of the frame (71); wherein:
the combined brake cable (5) includes:
an outer tube (5o);
a wire (5i) inserted into the outer tube (5o); and
an adjusting bolt (111) adjusting the length relationship between the outer tube (5o) and the wire (5i); and
the adjusting bolt (111) is located at a position, in the vehicle, to the rear of the position where the support member (101) supports the combined brake cable (5) and is not covered with the cover (67).

10. The straddled vehicle (10) of any one of claims 1 through 9, further comprising a clutch cable (131) transmitting a clutch operation made by the rider to a clutch;
wherein the combined brake cable (5) and the clutch cable (131) are secured to each other at a position, in the vehicle, to the rear of the position where the support member (101) supports the combined brake cable (5).

11. The straddled vehicle (10) of any one of claims 1 through 10, further comprising a high tension cord (121) supplying a high voltage for ignition to the engine (63);
wherein the high tension cord (121) is routed to pass the first area (RA;LA).

12. The straddled vehicle (10) of any one of claims 1 through 11, wherein the support member (101) is provided on a side surface of the engine (63), and supports the combined brake cable (5) at a position to the side of the engine (63).

13. The straddled vehicle (10) of any one of claims 1 through 11, further comprising a fuel tank (57) located above the engine (63);
wherein the support member (101) is provided below the fuel tank (57), and supports the combined brake cable (5) at a position to the side of the engine (63).

14. The straddled vehicle (10) of any one of claims 1 through 11, wherein the support member (101) is provided on the downtube (58), extends from the downtube (58) to a position to the side of the engine (63) and supports the combined brake cable (5) at a position to the side of the engine (63).

15. The straddled vehicle (10) of any one of claims 1 through 11, wherein:
the engine (63) is provided with a gas intake duct (63d) cooling the engine (63); and
the support member (101) is provided on the gas intake duct (63d), and supports the combined brake cable (5) at a position to the side of the engine (63).

## Patentansprüche

1. Spreizsitz-Fahrzeug (10), das umfasst:
einen Rahmen (71), der ein Steuerrohr (51) enthält;
ein Vorderrad (60) und ein Hinterrad (56), die über den Rahmen (71) drehbar gelagert sind;
eine Lenkstange (62), die so gelagert ist, dass sie um eine Achse des Kopfrohrs (51) herum gedreht werden kann;
einen Motor (63), der von dem Rahmen (71) getragen wird; sowie
ein kombiniertes Bremssystem (1), das eine Vorderradbremse (68), die das Vorderrad (60) bremst, und eine Hinterradbremse (69) einschließt, die das Hinterrad (56) bremst, wobei mit dem kombinierten Bremssystem (1) die Vorderradbremse (68) und die Hinterradbremse (69) kombiniert betätigt werden;
wobei
der Rahmen (71) enthält:
einen Hauptrahmen (52), der sich von dem Steuerrohr (51) nach hinten erstreckt, wobei der Hauptrahmen (52) den Motor (63) so trägt, dass sich der Motor (63) unterhalb des Hauptrahmens (52) befindet; und
ein Unterrohr (58), das sich von dem Steuerrohr (51) nach unten und nach hinten erstreckt und so wenigstens teilweise vor dem Motor (63) angeordnet ist;
das kombinierte Bremssystem (1) enthält:
ein Vorderradbremsen-Betätigungselement (80), das sich an der Lenkstange befindet, wobei das Vorderradbremsen-Betätigungselement (80) in Reaktion auf eine von einem Fahrer ausgeführte Bedienung die Vorderradbremse (68) betätigt;
ein Hinterradbremsen-Betätigungselement (90), das sich hinter dem Vorderradbremsen-Betätigungselement (80) und unterhalb desselben befindet, wobei das Hinterradbremsen-Betätigungselement (90) in Reaktion auf eine von einem Fahrer ausgeführte Bedienung die Hinterradbremse (69) betätigt; sowie
einen kombinierten Bremszug (5), der mit dem Vorderradbremsen-Betätigungselement (80) und dem Hinterradbremsen-Betätigungselement (90) verbunden ist, wobei der kombinierte Bremszug (5) eine auf das Hinterradbremsen-Betätigungselement (90) ausgeübte Betätigungskraft zu dem Vorderradbremsen-Betätigungselement (80) überträgt; und
das Vorderradbremsen-Betätigungselement (80) in einem ersten Bereich (RA; LA) angeordnet ist, der einer von zwei Bereichen ist, die, in einer Fahrzeug-Draufsicht, voneinander getrennt rechts und links von einer Fahrzeugmittellinie (CL) liegen,
**dadurch gekennzeichnet, dass**
der kombinierte Bremszug (5) in dem ersten Bereich (RA; LA) verlegt ist und den Motor (63), in einer Fahrzeug-Seitenansicht gesehen, zumindest teilweise überlappt; und
das Spreizsitz-Fahrzeug (10) des Weiteren ein Trageelement (101) enthält, das den kombinierten Bremszug (5) an einer Position seitlich von dem Motor (63) trägt.

2. Spreizsitz-Fahrzeug (10) nach Anspruch 1, wobei sich der kombinierte Bremszug (5) von einer Position an vor dem Motor (63) wenigstens teilweise nach unten und nach hinten erstreckt.

3. Spreizsitz-Fahrzeug (10) nach Anspruch 1 oder 2, wobei der kombinierte Bremszug (5), in einer Fahrzeug-Seitenansicht gesehen, einen Zylinder des Motors (63) überlappt.

4. Spreizsitz-Fahrzeug (10) nach einem der Ansprüche 1 bis 3, wobei das Hinterradbremsen-Betätigungselement (90) in dem ersten Bereich (RA; LA) angeordnet ist.

5. Spreizsitz-Fahrzeug (10) nach einem der Ansprüche 1 bis 4, wobei:
der kombinierte Bremszug (5), in einer Fahrzeug-Seitenansicht gesehen, den Motor (63) überlappt; und
wenn die Lenkstange (62) nicht gesteuert wird, ein Abschnitt des kombinierten Bremszugs (5), der den Motor (63) überlappt, so angeordnet ist, dass sich ein vorderes Ende desselben oberhalb eines hinteren Endes desselben befindet.

6. Spreizsitz-Fahrzeug (10) nach einem der Ansprüche 1 bis 5, wobei sich der kombinierte Bremszug (5) von einer mit dem Vorderradbremsen-Betätigungselement (80) verbundenen Position desselben nach vorn erstreckt, dann nach unten gebogen ist und sich nach hinten erstreckt.

7. Spreizsitz-Fahrzeug (10) nach Anspruch 6, das des Weiteren eine Vielzahl von Vorderrad-Lagerungselementen (59) umfasst, die das Vorderrad (60) lagern;
wobei der kombinierte Bremszug (5) zwischen der Vielzahl von Vorderrad-Lagerungselementen (59) verläuft.

8. Spreizsitz-Fahrzeug (10) nach Anspruch 6 oder 7, wobei der kombinierte Bremszug (5) an einer Position hinter dem Hinterradbremsen-Betätigungselement (90) gekrümmt ist und sich dann nach vorn erstreckt und mit dem Hinterradbremsen-Betätigungselement (90) verbunden ist.

9. Spreizsitz-Fahrzeug (10) nach einem der Ansprüche 1 bis 8, das des Weiteren eine Verkleidung (67) umfasst, die wenigstens einen Teil einer Seitenfläche des Rahmens (71) abdeckt; wobei:
der kombinierte Bremszug (5) enthält:
ein Außenrohr (5o);
ein Seil (5i), das in das Außenrohr (5o) eingeführt ist; sowie
eine Einstellschraube (111), mit der die Längenbeziehung zwischen dem Außenrohr (5o) und dem Seil (5i) eingestellt wird; wobei
die Einstellschraube (111) an einer Position an dem Fahrzeug hinter der Position angeordnet ist, an der das Trageelement (101) den kombinierten Bremszug (5) trägt, und nicht mit der Verkleidung (67) abgedeckt ist.

10. Spreizsitz-Fahrzeug (10) nach einem der Ansprüche 1 bis 9, das des Weiteren einen Kupplungszug (131) umfasst, der eine von dem Fahrer ausgeführte Kupplungsbedienung auf eine Kupplung überträgt;
wobei der kombinierte Bremszug (5) und der Kupplungszug (131 an einer Position an dem Fahrzeug hinter der Position aneinander befestigt sind, an der das Trageelement (101) den kombinierten Bremszug (5) trägt.

11. Spreizsitz-Fahrzeug (10) nach einem der Ansprüche 1 bis 10, das des Weiteren ein Hochspannungskabel (121) umfasst, das dem Motor (63) eine Hochspannung zur Zündung zuführt;
wobei das Hochspannungskabel (121) so geführt wird, dass es den ersten Bereich (RA; LA) passiert.

12. Spreizsitz-Fahrzeug (10) nach einem der Ansprüche 1 bis 11, wobei sich das Trageelement (101) an einer Seitenfläche des Motors (63) befindet und den kombinierten Bremszug (5) an einer Position seitlich von dem Motor (63) trägt.

13. Spreizsitz-Fahrzeug (10) nach einem der Ansprüche 1 bis 11, das des Weiteren einen Kraftstofftank (57) umfasst, der oberhalb des Motors (63) angeordnet ist;
wobei sich das Trageelement (101) unterhalb des Kraftstofftanks (57) befindet und den kombinierten Bremszug (5) an einer Position seitlich von dem Motor (63) trägt.

14. Spreizsitz-Fahrzeug (10) nach einem der Ansprüche 1 bis 11, wobei sich das Trageelement (101) an dem Unterrohr (58) befindet, sich von dem Unterrohr (58) zu einer Position seitlich von dem Motor (63) erstreckt und den kombinierten Bremszug (5) an einer Position seitlich von dem Motor (63) trägt.

15. Spreizsitz-Fahrzeug (10) nach einem der Ansprüche 1 bis 11, wobei:
der Motor (63) mit einer Gas-Ansaugleitung (63d) versehen ist, die den Motor (63) kühlt; und
sich das Trageelement (101) an der Gas-Ansaugleitung (63d) befindet und den kombinierten Bremszug (5) an einer Position seitlich von dem Motor (63) trägt.

## Revendications

1. Véhicule à selle (10) comprenant :
un cadre (71) incluant un tube de fourche (51),
une roue avant (60) et une roue arrière (56) supportées par le cadre (71) tout en pouvant tourner,
un guidon (62) supporté de sorte à pouvoir tourner autour d'un axe du tube de fourche (51),
un moteur thermique (63) supporté par le cadre (71), et
un système de freinage combiné (1) incluant un frein de roue avant (68) qui freine la roue avant (60) et un frein de roue arrière (69) qui freine la roue arrière (56), le système de freinage combiné (1) manœuvrant le frein de roue avant (68) et le frein de roue arrière (69) de manière combinée,
dans lequel :
le cadre (71) inclut :
un cadre principal (52) s'étendant vers l'arrière depuis le tube de fourche (51), le cadre principal (52) supportant le moteur (63) de sorte à ce que le moteur (63) se trouve en dessous du cadre principal (52), et
un premier tube descendant (58) s'étendant vers le bas et vers l'arrière à partir du tube de fourche (51) de sorte à se trouver au moins partiellement situé à l'avant du moteur (63),
le système de freinage combiné (1) inclut ;
un actionneur de frein de roue avant (80) disposé sur le guidon, l'actionneur de frein de roue avant (80) actionnant le frein de roue avant (68) en réponse à une manœuvre opérée par un pilote,
un actionneur de frein de roue arrière (90) disposé à l'arrière et en dessous de l'actionneur de frein de roue avant (80), l'actionneur de frein de roue arrière (90) actionnant le frein de roue arrière (69) en réponse à une manœuvre opérée par le pilote, et
un câble de frein combiné (5) raccordé à l'actionneur de frein de roue avant (80) et à l'actionneur de frein de roue arrière (90), le câble de frein combiné (5) transmettant la force d'actionnement appliquée à l'actionneur de frein de roue arrière (90) sur l'actionneur de frein de roue avant (80), et
l'actionneur de frein de roue avant (80) est situé dans une première zone (RA ; LA) qui est l'une de deux zones séparées l'une de l'autre se trouvant sur la droite et sur la gauche de la ligne centrale du véhicule (CL) comme on peut le voir sur une vue en plan du véhicule,
**caractérisé en ce que**
le câble de frein combiné (5) est acheminé dans la première zone (RA ; LA) et chevauche au moins partiellement le moteur (63) comme on peut le voir dans une vue latérale du véhicule, et
le véhicule à selle (10) inclut en outre un élément de support (101) supportant le câble de frein combiné (5) au niveau d'une position située sur le côté du moteur (63).

2. Véhicule à selle (10) selon la revendication 1, dans lequel le câble de frein combiné (5) s'étend au moins partiellement vers le bas et vers l'arrière à partir d'une position jusqu'à l'avant du moteur (63).

3. Véhicule à selle (10) selon la revendication 1 ou la revendication 2, dans lequel le câble de frein combiné (5) chevauche un cylindre du moteur (63) comme on peut le voir dans une vue latérale du véhicule.

4. Véhicule à selle (10) selon l'une quelconque des revendications 1 à 3, dans lequel l'actionneur de frein de roue arrière (90) est situé dans la première zone (RA ; LA).

5. Véhicule à selle (10) selon l'une quelconque des revendications 1 à 4, dans lequel :
le câble de frein combiné (5) chevauche le moteur (63) comme on peut le voir dans une vue latérale du véhicule, et
lorsque le guidon (62) n'est pas braqué, une partie du câble de frein combiné (5) qui chevauche le moteur (63) est située de sorte à ce que son extrémité avant se trouve au-dessus de son extrémité arrière.

6. Véhicule à selle (10) selon l'une quelconque des revendications 1 à 5, dans lequel le câble de frein combiné (5) s'étend vers l'avant depuis sa position qui est reliée à l'actionneur de frein de roue avant (80), puis il est plié vers le bas et s'étend vers l'arrière.

7. Véhicule à selle (10) selon la revendication 6, comprenant en outre une pluralité d'éléments de support de roue avant (59) qui supportent la roue avant (60),
dans lequel le câble de frein combiné (5) passe entre les différents éléments de support de roue avant (59).

8. Véhicule à selle (10) selon la revendication 6 ou la revendication 7, dans lequel le câble de frein combiné (5) est incurvé au niveau d'une position vers l'arrière de l'actionneur de frein de roue arrière (90), puis il s'étend vers l'avant afin d'être raccordé à l'actionneur de frein de roue arrière (90).

9. Véhicule à selle (10) selon l'une quelconque des revendications 1 à 8, comprenant en outre un carénage (67) recouvrant au moins une partie d'une surface latérale du cadre (71), où :
le câble de frein combiné (5) inclut :
un tube externe (5o),
un câble (5i) inséré dans le tube externe (5o), et
un boulon d'ajustement (111) réglant la relation de longueur entre le tube externe (5o) et le câble (5i), et
le boulon d'ajustement (111) est situé au niveau d'une position dans le véhicule vers l'arrière de la position où l'élément de support (101) soutient le câble de frein combiné (5), et il n'est pas recouvert du carénage (67).

10. Véhicule à selle (10) selon l'une quelconque des revendications 1 à 9, comprenant en outre un câble d'embrayage (131) transmettant une manœuvre d'embrayage opérée par le pilote sur un embrayage,
dans lequel le câble de frein combiné (5) et le câble d'embrayage (131) sont immobilisés l'un sur l'autre au niveau d'une position dans le véhicule vers l'arrière de la position où l'élément de support (101) soutient le câble de frein combiné (5).

11. Véhicule à selle (10) selon l'une quelconque des revendications 1 à 10, comprenant en outre un cordon haute tension (121) fournissant une haute tension à l'allumage du moteur (63),
dans lequel le cordon haute tension (121) est acheminé pour passer la première zone (RA ; LA).

12. Véhicule à selle (10) selon l'une quelconque des revendications 1 à 11, dans lequel l'élément de support (101) est disposé sur une surface latérale du moteur (63) et soutient le câble de frein combiné (5) au niveau d'une position située sur le côté du moteur (63).

13. Véhicule à selle (10) selon l'une quelconque des revendications 1 à 11, comprenant en outre un réservoir de carburant (57) situé au-dessus du moteur (63),
dans lequel l'élément de support (101) est disposé en dessous du réservoir de carburant (57) et soutient le câble de frein combiné (5) au niveau d'une position située sur le côté du moteur (63)

14. Véhicule à selle (10) selon l'une quelconque des revendications 1 à 11, dans lequel l'élément de support (101) est disposé sur le tube descendant (58), s'étend depuis le tube descendant (58) vers une position située sur le côté du moteur (63) et soutient le câble de frein combiné (5) au niveau d'une position située sur le côté du moteur (63).

15. Véhicule à selle (10) selon l'une quelconque des revendications 1 à 11, dans lequel :
le moteur (63) et doté d'un conduit d'admission de gaz (63d) refroidissant le moteur (63), et
l'élément de support (101) est disposé sur le conduit d'admission de gaz (63d) et soutient le câble de frein combiné (5) au niveau d'une position située sur le côté du moteur (63).
